# EUROPÄISCHE PATENTANMELDUNG

(11) **EP 2 653 738 A2**
(43) Veröffentlichungstag der Anmeldung: **23.10.2013**
(21) Anmeldenummer: 13164338.9
(22) Anmeldetag: 18.04.2013
(51) Int. Cl.: F16C 29/06, F16C 29/00

(54) **Abdeckkappe und Zusammenstellungsprodukt**

(30) Priorität: 18.04.2012 DE 102012206374; 18.04.2012 DE 202012101435 U
(71) Anmelder: Aktiebolaget SKF, 41550 Göteborg (SE)
(72) Erfinder: Jeschka, Erwin, 97711 Maßbach (DE); Gransow, Anita, 97526 Sennfeld (DE); Hofmann, Joachim, 97456 Dittelbrunn (DE); Kemmer, Martin, 97440 Werneck (DE); Stahl, Erwin, 97714 Oerlenbach-Rottershausen (DE); Velde, Henryk, 97440 Werneck (DE); Weng, Nerol, 975 Fenglin Township (TW); Wu, Dennis, 22005, ROC New Taipei City (TW)
(74) Vertreter: Schonecke, Mitja

(57) **Zusammenfassung**

Eine Abdeckkappe (180) zum Verschließen einer Öffnung (170) in einer Schiene (110) einer Linearführung (100) gemäß einem Ausführungsbeispiel umfasst eine Deckfläche (190), um die Öffnung (170) im Wesentlichen bündig mit einer Oberfläche (160) der Schiene (110) zu verschließen, einen ersten Seitenflächenbereich (340), der sich in einem in die Öffnung (170) eingesetzten Zustand parallel zu einer vorbestimmten Richtung (350) erstreckt, einen zweiten Seitenflächenbereich (360), der eine Kontur aufweist, die gegenüber einer Kontur des ersten Seitenflächenbereichs (340) zurückversetzt ist, und einen dritten Seitenflächenbereich (370), der sich wenigstens abschnittsweise parallel zu der vorbestimmten Richtung (350) erstreckt, der eine Kontur aufweist, die wenigstens teilweise über die Kontur des zweiten Seitenflächenbereichs (360) hinaus steht, und derart ausgebildet ist, um mit einer Seitenwand (290) der Öffnung (170) eine Presspassung zu bilden. Hierdurch kann es gegebenenfalls möglich sein, eine einfach herzustellende, robuste, zuverlässige und möglichst einfach zu montierende Abdeckung für die Öffnung (170) in der Schiene (110) zu schaffen.

## Beschreibung

Ausführungsbeispiele beziehen sich auf eine Abdeckkappe zum Verschließen einer Öffnung in einer Schiene einer Linearführung und auf ein Zusammenstellungsprodukt umfassend eine Abdeckkappe und eine Schiene einer Linearführung.

Linearführungen, die auch als Linearsysteme bezeichnet werden, werden in einer Vielzahl von Anwendungsgebieten eingesetzt, wenn es darum geht, Bauteile, Baugruppen oder andere Objekte linear entlang eines Bewegungspfads zu führen. Sie umfassen typischerweise wenigstens eine Schiene und wenigstens einen Wagen, der auf der Schiene entlang einer Erstreckungsrichtung der Schiene linear bewegbar angeordnet ist. Je nach konkreter Implementierung kann es sich hierbei um einen Profilschienenwagen handeln, der auf einer entsprechenden Profilschiene, oder auch um einen Laufwagen mit Laufrollen, der auf einer entsprechenden Führungsschiene angeordnet ist.

Beide unterscheiden sich im Wesentlichen darin, wie die Bewegung des betreffenden Wagens zu der entsprechenden Schiene geführt wird. Bei einer Profilschienenführung stehen Wälzkörper des Profilschienenwagens sowohl mit diesem wie auch mit der Profilschiene in Kontakt und bewegen sich daher im Allgemeinen relativ zu dem Profilschienenwagen und der Profilschiene bei einer entsprechenden Bewegung des Wagens. Im Unterschied hierzu weist ein Laufwagen typischerweise eine Mehrzahl von Laufrollen auf, die im Wesentlichen fest an dem Wagen angebracht sind. Die Laufrollen sind hierbei typischerweise über entsprechende Lager gelagert.

Linearführungen werden hierbei unter unterschiedlichsten Randbedingungen, beispielsweise auch bei extremen Umgebungsbedingungen eingesetzt. Sie werden so beispielsweise auch bei Anwendungen eingesetzt, bei denen sie verstärkt Schmutz, Spänen, Kühlwasser und anderen Verunreinigungen ausgesetzt sind. Diese Verunreinigungen können sich beispielsweise auf den betreffenden Schienen, beispielsweise im Bereich von Befestigungsbohrungen oder anderen Öffnungen, ansammeln. Um ein Eindringen der betreffenden Verunreinigungen in die Öffnungen zu unterbinden, werden konventionell Abdeckungen verwendet, die typischerweise aus einem Kunststoff gefertigt sind. Diese Kunststoffkappen sind für viele Fälle ausreichend.

Für manche Einsätze kann jedoch das Material oder die Genauigkeit, mit der die Kunststoffkappen gefertigt sind, jedoch gegebenenfalls nicht ausreichen. Dies kann beispielsweise dann der Fall sein, wenn höhere Temperaturen vorliegen oder die Kappen mit heißen Metallspänen, Flüssigkeiten oder anderen Verunreinigungen in Kontakt geraten können. Der Einsatz von Abdeckungen aus Kunststoff kann daher gegebenenfalls für besondere Anwendungen nur bedingt ratsam sein.

Um solchen Anforderungen gerecht zu werden, können beispielsweise Abdeckkappen aus Metall oder einem anderen geeigneten Werkstoff eingesetzt werden. Diese unterscheiden sich von den konventionell eingesetzten Kunststoffen jedoch häufig hinsichtlich ihrer mechanischen, insbesondere ihrer elastischen Eigenschaften.

Es besteht daher ein Bedarf daran, eine einfach herzustellende, robuste, zuverlässige und möglichst einfach zu montierende Abdeckung für Öffnungen in Schienen einer Linearfiihrung zu schaffen.

Diesem Bedarf tragen eine Abdeckkappe gemäß Patentanspruch 1 und ein Zusammenstellungsprodukt gemäß Patentanspruch 9 Rechnung.

Eine Abdeckkappe gemäß einem Ausführungsbeispiel zum Verschließen einer Öffnung in einer Schiene einer Linearführung umfasst eine Deckfläche, die derart ausgebildet und angeordnet ist, um die Öffnung im Wesentlichen bündig mit einer Oberfläche der Schiene zu verschließen. Sie umfasst ferner einen ersten Seitenflächenbereich, der sich in einem in die Öffnung eingesetzten Zustand parallel zu einer vorbestimmten Richtung erstreckt, einen zweiten Seitenflächenbereich, der eine Kontur senkrecht zu der vorbestimmten Richtung aufweist, die gegenüber einer Kontur des ersten Seitenflächenbereichs zurückversetzt ist, um einen Auffangraum zur Aufnahme eines sich bei einem Einsetzen der Abdeckkappe lösenden Partikels zu bilden, und einen dritten Seitenflächenbereich, der sich wenigstens abschnittsweise parallel zu der vorbestimmten Richtung erstreckt, der eine Kontur senkrecht zu der vorbestimmten Richtung aufweist, die wenigstens teilweise über die Kontur des zweiten Seitenflächenbereichs hinaus steht, und derart ausgebildet ist, um mit einer Seitenwand der Öffnung eine Presspassung zu bilden. Der zweite Seitenflächenbereich ist hierbei zwischen dem ersten und dem dritten Seitenflächenbereich angeordnet.

So kann also der erste Seitenflächenbereich beispielsweise eine zylinderförmige Kontur bzw. Außenkontur aufweisen, wobei vorbestimmte Richtung mit einer Erstreckungsrichtung oder Symmetrierichtung der zylinderförmigen Kontur zusammenfällt. Gleiches kann ergänzend oder alternativ auch für den dritten Seitenflächenbereich gelten. Auch dieser kann eine zylinderförmige Kontur bzw. Außenkontur aufweisen, wobei vorbestimmte Richtung mit einer Erstreckungsrichtung oder Symmetrierichtung der zylinderförmigen Kontur zusammenfällt. Die vorbestimmte Richtung stellt so auch in einem solchen Fall die Eindrück-, Einsetz- oder Einpressrichtung dar. Diese stimmt häufig mit einer Erstreckungsrichtung der Bohrung oder Ausnehmung überein, in die die Abdeckkappe eingesetzt wird.

Einem Ausführungsbeispiel einer Abdeckkappe liegt so die Erkenntnis zugrunde, dass diese aufgrund der beschriebenen Struktur einfach herzustellen ist. Aufgrund dieser vergleichsweise einfachen Struktur kann die Abdeckkappe so auch eine robuste und zuverlässige Abdeckung der Öffnung in der Schiene ermöglichen. Darüber hinaus kann sie durch das Vorsehen des hinsichtlich seiner Kontur zurückgesetzten zweiten Bereichs und den dadurch gebildeten Auffangraum Partikel aufnehmen, die sich beim Einsetzen der Abdeckkappe in die Öffnung lösen können. Ein separates Entfernen entsprechender Partikel im Rahmen der Montage der Abdeckkappe kann dadurch gegebenenfalls entfallen.

Bei den entsprechenden Partikeln kann es sich beispielsweise um Abrieb, Späne oder andere Partikel der Abdeckkappe oder der Schiene handeln.

Eine Kontur ist hierbei durch eine Projektion einer Umfangslinie in einer Querschnittsebene des betreffenden Objekts gegeben. Die Projektionsrichtung liegt hierbei im Wesentlichen parallel zu der angegebenen Richtung, während die Querschnittsebene im Wesentlichen senkrecht zu der angegebenen Richtung liegt. Gerade bei einem Vergleich entsprechender Konturen sind hierbei typischerweise Übergangsbereiche unberücksichtigt zu lassen, in denen die betreffenden Konturen gegebenenfalls noch zusammenfallen oder aufgrund anderer, beispielsweise herstellungsbedingter Randbedingungen, voneinander auch abweichen können. Eine Kontur ist hierbei typischerweise bezogen auf eine andere Kontur zurückversetzt, wenn diese bezüglich eines signifikanten Anteils ihrer Kontur in einem Inneren einer Fläche verläuft, die von der anderen Kontur begrenzt wird. Anders ausgedrückt ist eine Kontur bezüglich auf eine andere Kontur zurückversetzt, wenn diese bezüglich eines signifikanten Anteils zu einem Inneren hin versetzt ist. Ein signifikanter Anteil ist hierbei häufig einer, der wenigstens 25 %, bei anderen Ausführungsbeispielen wenigstens 50 %, wenigstens 75 % oder die ganze Kontur umfasst. Ebenso kann dieser signifikante Anteil zusammenhängend sein.

Die Abdeckkappe ist hierbei derart ausgestaltet, dass diese die Öffnung im Wesentlichen bündig mit der Oberfläche der Schiene verschließt. Dies umfasst sowohl ein vollständig bündiges Verschließen, bei dem konstruktionsbedingt keine Rille, Rinne oder andere Ausnehmung im Bereich der Oberfläche an der Abdeckkappe zurückbleibt (z. B. hervorgerufen von einer Fase), wie auch ein Verschließen, bei dem beispielsweise aufgrund einer vorgesehenen Fase gerade eine solche kleine Ausnehmung nach dem Verschließen verbleibt. Im ersteren Fall kann dies beispielsweise dadurch geschehen, dass sowohl die Öffnung in der Schiene, wie auch die Abdeckkappe an einer Deckfläche eine scharfe Kante aufweisen. Die Konturen dieser Kanten können hierbei im Wesentlichen zusammenfallen. Diese Variante kann gegebenenfalls einen besseren Schutz des Wagens und/oder der Schiene ermöglichen, da ein Eindringen von Verunreinigungen oder korrosiven Medien über eine solche gerade im Wesentlichen vermeidbare Ausnehmung unwahrscheinlicher werden.

Bei einer Abdeckkappe gemäß einem Ausführungsbeispiel kann der erste Seitenflächenbereich eine Kontur senkrecht zu der vorbestimmten Richtung aufweisen, die im Wesentlichen einer Kontur der Öffnung entspricht. Hierdurch kann gegebenenfalls ein bündigerer und damit gegebenenfalls dichterer Verschluss der Öffnung realisiert werden.

Bei einer Abdeckkappe gemäß einem Ausführungsbeispiel kann der erste, der zweite und der dritte Seitenflächenbereich an einer Außenseite der Abdeckkappe angeordnet sein. Bei einer Abdeckkappe gemäß einem Ausführungsbeispiel kann der erste Seitenflächenbereich derart ausgebildet sein, um eine Übergangspassung oder eine Spielpassung mit der Seitenwand der Öffnung zu bilden. Hierdurch kann gegebenenfalls eine Partikelbildung während des Einsetzens der Abdeckkappe auf den dritten Seitenflächenbereich beschränkt werden. Anders ausgedrückt kann hierdurch gegebenenfalls bei dem Einsetzen der Abdeckkappe das Lösen eines Partikels durch den ersten Seitenflächenbereich unterbunden werden. Hierdurch kann so gegebenenfalls eine Gefahr eines Vordringens eines Partikels an eine Oberfläche der Schiene, in der sich die Öffnung befindet, reduziert werden.

Bei einer Abdeckkappe gemäß einem Ausführungsbeispiel kann sich der zweite Seitenflächenbereich höchstens 5 mm entlang der vorbestimmten Richtung erstrecken. Bei anderen Ausführungsbeispielen kann dieser Bereich gegebenenfalls auch auf höchstens 2 mm, höchstens 1 mm, höchstens 0,5 mm, höchstens 0,2 mm oder höchstens 0,1 mm beschränkt sein. Hierdurch kann gegebenenfalls eine Höhe der Abdeckkappe entlang der vorbestimmten Richtung reduziert werden, ohne dass der Auffangraum hinsichtlich seines Volumens derart beschränkt wird, dass dieser die sich hierbei typischerweise lösenden Partikel nicht mehr aufnehmen kann. So kann es gegebenenfalls möglich sein, eine im Wesentlichen scheibenförmige Abdeckkappe vorzusehen, die gegebenenfalls jedoch Ausnehmungen aufweisen kann. Bei einer Abdeckkappe gemäß einem Ausführungsbeispiel kann so der zweite Seitenflächenbereich eine Form eines Hinterstichs und/oder eines Einstichs aufweisen.

Bei einer Abdeckkappe gemäß einem Ausführungsbeispiel kann eine Kontur senkrecht zu der vorbestimmten Richtung des dritten Seitenflächenbereichs gegenüber einer Kontur des ersten Seitenflächenbereichs zurückversetzt sein. Hierdurch kann gegebenenfalls eine Berührung des auf eine Presspassung hin ausgebildeten dritten Seitenflächenbereichs mit einem oberen Abschnitt der Öffnung gegebenenfalls unterbunden werden. Ein Ort der Partikelbildung während des Einsetzens der Abdeckkappe kann so gegebenenfalls an einen einem Inneren der Schiene zugewandteren Bereich verlagert werden. Hierdurch kann gegebenenfalls ein Gelangen des Partikels an die Oberfläche der Schiene effizienter verhindert werden.

Bei einer Abdeckkappe gemäß einem Ausführungsbeispiel können die Konturen des ersten und des zweiten Seitenflächenbereichs im Wesentlichen formenmäßig identisch, beispielsweise im Wesentlichen kreisrund, sein. Hierdurch kann gegebenenfalls eine Herstellung der Abdeckkappe vereinfacht werden. So kann es sich gegebenenfalls um ein Drehteil handeln.

Bei einer Abdeckkappe gemäß einem Ausführungsbeispiel kann der dritte Seitenflächenbereich eine Verzahnungsstruktur aufweisen. Hierdurch kann diese gegebenenfalls gegenüber eigenen Herstellungstoleranzen und/oder den Toleranzen der Öffnung in der Schiene unempfindlicher werden. So kann eine entsprechende Verzahnungsstruktur beispielsweise zu einer leicht größeren Kontur beitragen, sodass auch Öffnungen, die von ihrer spezifizierten Größe nach oben abweichen, durch diese verschließbar sind. Je nach verwendetem Material kann aufgrund der Verzahnungsstruktur und einem Zwischenraum zwischen zwei benachbarten Zähnen der Verzahnungsstruktur eine Deformation der Verzahnungsstruktur eintreten, sodass gegebenenfalls auch Öffnungen mit einer entsprechenden Abdeckkappe verschlossen werden können, die kleiner als ihre entsprechende Spezifikation sind. Entsprechend umgekehrt kann auch gegebenenfalls bei einer entsprechenden größer oder kleiner ausfallenden Abdeckkappe ein Einsetzen derselben in eine Öffnung immer noch möglich sein. Eine solche Verzahnungsstruktur kann daher vorteilhaft im Hinblick auf einen Toleranzbereich sein.

Bei einer solchen Abdeckkappe kann die Verzahnungsstruktur eine Rändelung, beispielsweise eine axial ausgerichtete Rändelung, aufweisen. Hierdurch kann die Verzahnungsstruktur gegebenenfalls auf eine einfache Art und Weise herstellbar sein.

Eine Abdeckkappe gemäß einem Ausführungsbeispiel kann ferner eine Ausnehmung aufweisen, die sich von einer der Deckfläche abgewandten Seite ausgehend in die Abdeckkappe wenigstens teilweise in einen Bereich hinein erstreckt, der durch den dritten Seitenflächenbereich seitlich begrenzt wird. Hierdurch kann gegebenenfalls eine Flexibilität des dritten Seitenflächenbereichs weiter gesteigert werden, sodass größere Abweichungen von der spezifizierten Größe der Abdeckkappe bzw. der Öffnung durch die Abdeckkappe bei der Montage tolerierbar sind. Anders ausgedrückt kann hierdurch gegebenenfalls eine Toleranz gegenüber Herstellungsschwankungen gesteigert werden. Bei einem solchen Ausfiihrungsbeispiel einer Abdeckkappe kann sich die Ausnehmung auch vollständig durch diesen Bereich hindurch erstrecken.

Bei einer Abdeckkappe gemäß einem Ausführungsbeispiel kann der dritte Seitenflächenbereich segmentiert, beispielsweise geschlitzt, ausgeführt sein. Anders ausgedrückt kann der dritte Seitenflächenbereich beispielsweise wenigstens eine, gegebenenfalls auch eine Mehrzahl weiterer Ausnehmungen aufweisen, die sich senkrecht zu der vorbestimmten Richtung durch den dritten Seitenflächenbereich hindurch erstrecken und gegebenenfalls mit der zuvor genannten Ausnehmung in Kontakt stehen. Hierdurch kann gegebenenfalls eine Flexibilität des dritten Seitenflächenbereichs, der für die Presspassung verantwortlich ist, weiter gesteigert werden, sodass eine Toleranz gegenüber Herstellungsschwankungen gegebenenfalls weiter gesteigert werden kann.

Bei einer Abdeckkappe gemäß einem Ausführungsbeispiel kann sich der erste Seitenflächenbereich an die Deckfläche - abgesehen von einem Übergangsbereich - unmittelbar anschließen. So kann bei einer Abdeckkappe gemäß einem Ausführungsbeispiel die Deckfläche als ebene Fläche ausgebildet sein.

Bei einer Abdeckkappe gemäß einem Ausführungsbeispiel können der erste, der zweite und der dritte Seitenflächenbereich die Abdeckkappe nach außen wenigstens teilweise begrenzen. Die Abdeckkappe gemäß einem Ausführungsbeispiel kann beispielsweise einstückig gefertigt sein. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Eine Abdeckkappe gemäß einem Ausführungsbeispiel kann aus einem metallischen Material, beispielsweise Messing oder Stahl, gefertigt sein. Selbstverständlich können jedoch auch andere Materialen, die den entsprechenden Einsatzbedingungen angemessen sind, zur Herstellung einer Abdeckkappe herangezogen werden. So kann beispielsweise eine Abdeckkappe gemäß einem Ausführungsbeispiel auch aus einem Kunststoff, beispielsweise einem spritzgießfähigen Kunststoff, herstellbar sein.

Ein Zusammenstellungsprodukt gemäß einem Ausführungsbeispiel umfasst eine Schiene einer Linearführung, wobei die Schiene wenigstens eine von einer Oberfläche der Schiene ausgehende und sich entlang einer Erstreckungsrichtung erstreckenden Öffnung umfasst. Das Zusammenstellungsprodukt umfasst ferner wenigstens eine Abdeckkappe gemäß einem Ausführungsbeispiel zum Verschließen der wenigstens einen Öffnung, wobei die vorbestimmte Richtung mit der Erstreckungsrichtung im eingesetzten Zustand zusammenfällt.

Bei einem Zusammenstellungsprodukt gemäß einem Ausführungsbeispiel kann die Seitenwand der Öffnung an der Oberfläche der Schiene einen ersten Abschnitt und einen an dem ersten Abschnitt entlang der Erstreckungsrichtung anschließenden zweiten Abschnitt aufweisen, wobei der zweite Abschnitt eine Kontur senkrecht zu der Erstreckungsrichtung aufweist, die vollständig innerhalb einer Kontur des zweiten Abschnitts senkrecht zu der Erstreckungsrichtung liegt. Der dritte Seitenflächenbereich der Abdeckkappe und der zweite Abschnitt der Öffnung können hierbei gerade so ausgebildet und angeordnet sein, dass bei einem Einsetzen der Abdeckkappe in die Öffnung zwischen diesen die Presspassung vorliegt. Hierdurch kann so gegebenenfalls ein Erzeugen des Partikels beim Einsetzen der Abdeckkappe in die Öffnung an einen Ort verlagert werden, sodass ein Entkommen des Partikels an die Oberfläche der Schiene unwahrscheinlicher wird. Hierdurch kann also gegebenenfalls eine Aufnahme des Partikels in dem Auffangraum mit einer größeren Wahrscheinlichkeit erfolgen.

Bei einem Zusammenstellungsprodukt gemäß einem Ausführungsbeispiel kann die Kontur des ersten Seitenflächenbereichs im Wesentlichen der Kontur des ersten Abschnitts entsprechen. Die Konturen können hinsichtlich Form und/oder Größe einander entsprechen. Hierdurch kann gegebenenfalls eine Abdeckwirkung der Abdeckkappe dadurch verbessert werden, dass an dem der Oberfläche der Schiene zugewandten ersten Abschnitt die Abdeckkappe und die Öffnung aufeinander abgestimmt sind.

Bei einem Zusammenstellungsprodukt gemäß einem Ausführungsbeispiel kann die Kontur des dritten Seitenflächenbereichs der Abdeckkappe im Wesentlichen der Kontur des zweiten Abschnitts der Öffnung entsprechen. Hierdurch kann gegebenenfalls ein Sitz der Abdeckkappe in der Öffnung verbessert werden, da durch die Abstimmung der Konturen aufeinander gegebenenfalls eine größere Berührfläche zwischen der Abdeckkappe und der Öffnung gebildet werden kann.

Bei einem Zusammenstellungsprodukt gemäß einem Ausführungsbeispiel kann eine Höhe des ersten Seitenflächenbereichs entlang der Erstreckungsrichtung geringer als eine Höhe des ersten Abschnitts der Öffnung entlang der Erstreckungsrichtung sein. Hierdurch kann gegebenenfalls der Auffangraum vergrößert werden und/oder hinsichtlich seiner Form anpassbar sein.

Bei einem Zusammenstellungsprodukt gemäß einem Ausführungsbeispiel kann wenigstens eine Öffnung eine Bohrung zur mechanischen Befestigung der Schiene umfassen. So kann eine entsprechende Öffnung wenigstens abschnittsweise eine Durchgangsbohrung umfassen, mit deren Hilfe die Schiene an einem weiteren Bauteil oder einem Fundament befestigbar ist. Bei einem Zusammenstellungsprodukt gemäß einem Ausführungsbeispiel kann die Schiene eine Profilschiene für eine Profilschienenführung oder eine Laufschiene für eine Laufschienenfiihrung sein.

Eine kraftschlüssige oder reibschlüssige Verbindung kommt durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen.

Eine Abdeckkappe gemäß einem Ausführungsbeispiel kann im Wesentlichen rotationssymmetrisch sein. Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie wird hierbei als Rotationssymmetrie bezeichnet.

Nachfolgend werden unter Bezugnahme auf die beiliegenden Figuren Ausführungsbeispiele näher beschrieben und erläutert.
Fig. 1 zeigt eine perspektivische Darstellung einer Profilschienenführung;
Fig. 2 zeigt eine Querschnittsdarstellung durch eine Profilschiene;
Fig. 3 zeigt eine Querschnittsdarstellung durch eine weitere Profilschiene;
Fig. 4 illustriert eine Exzentrizität von Abschnitten der Öffnung in der Profilschiene;
Fig. 5a bis 5d zeigen perspektivische Darstellung verschiedener Abdeckkappen gemäß einem Ausführungsbeispiel;
Fig. 6 zeigt eine Querschnittsdarstellung durch eine Profilschiene mit einer Befestigungsschraube und der in Fig. 5a gezeigten Abdeckkappe in einem nur teilweise eingesetzten Zustand;
Fig. 7 zeigt eine Detailvergrößerung der in Fig. 6 gezeigten Querschnittsdarstellung;
Fig. 8 zeigt eine Querschnittsdarstellung durch die Profilschiene mit der Befestigungsschraube und der in Fig. 5a gezeigten Abdeckkappe aus Fig. 6 in einem vollständig eingesetzten Zustand;
Fig. 9 zeigt eine Detailvergrößerung der in Fig. 8 gezeigten Querschnittsdarstellung;
Fig. 10 zeigt eine Querschnittsdarstellung durch eine Profilschiene mit einer Befestigungsschraube und der in Fig. 5b gezeigten Abdeckkappe in einem nur teilweise eingesetzten Zustand;
Fig. 11 zeigt eine Detailvergrößerung der in Fig. 10 gezeigten Querschnittsdarstellung;
Fig. 12 zeigt eine Querschnittsdarstellung durch die Profilschiene mit der Befestigungsschraube und der in Fig. 5b gezeigten Abdeckkappe aus Fig. 10 in einem vollständig eingesetzten Zustand;
Fig. 13 zeigt eine Detailvergrößerung der in Fig. 12 gezeigten Querschnittsdarstellung;

Bei der nachfolgenden Beschreibung der beigefiigten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

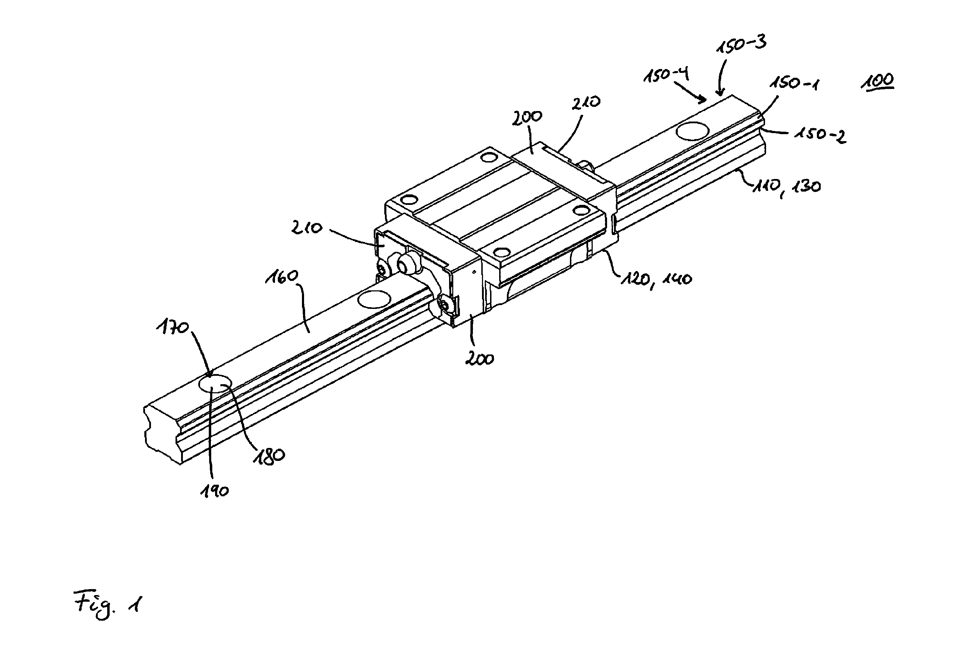

Fig. 1 zeigt eine perspektivische Darstellung einer Linearführung 100, die eine Schiene 110 und einen Wagen 120 umfasst. Bei der in Fig. 1 gezeigten Linearführung 100 handelt es sich genauer gesagt um eine Profilschienenführung, bei dem die Schiene 110 eine Profilschiene 130 und der Wagen 120 ein Profilschienenwagen 140 ist. Die Schiene 110 umfasst hier insgesamt vier Laufbahnen 150-1, 150-2, 150-3, 150-4, von denen jedoch lediglich die zwei vertikal übereinander angeordneten Laufbahnen 150-1 und 150-2 aufgrund der in Fig. 1 gewählten Darstellung sichtbar sind. Zwischen den beiden Laufbahnen 150-1 und 150-3 weist die Schiene 110 eine im Wesentlichen ebene Oberfläche 160 auf, die bei der Linearführung 100 eine Mehrzahl äquidistant verteilter Öffnungen 170 umfasst, die mit Abdeckkappen 180 gemäß einem Ausführungsbeispiel verschlossen sind.

Die Abdeckkappen 180 weisen hierbei jeweils eine Deckfläche 190 auf, die gerade derart ausgebildet und angeordnet ist, um die Öffnung 170 im Wesentlichen bündig mit der Oberfläche 160 der Schiene 110 zu verschließen. Zu diesem Zweck sind die Deckflächen 190 hier im Wesentlichen eben bzw. plan ausgeführt. Die Abdeckkappe 180 ist als im Wesentlichen vollständig in der Öffnung 170 versenkbar ausgeführt. Das im Wesentlichen bündige Verschließen der Öffnung 170 erfolgt hier dadurch, dass die Abdeckkappe 180 im Wesentlichen vollständig in der betreffenden Öffnung 170 versenkt wird.

Wie eingangs bereits erwähnt wurde, werden Linearfiihrungen mit entsprechenden Schienen 110 und ihren Wagen 120 zum Teil bei extremen Umgebungsbedingungen eingesetzt, bei denen eine besondere Belastung der Linearführung 100 durch Schmutz, Späne, Kühlwasser und sonstige Verunreinigungen auftreten können. Bei diesen Einsätzen kann es daher ratsam, gegebenenfalls sogar wichtig sein, die Öffnungen 170 mit Abdeckkappen 180 abzudecken, um so dem Wagen 120 ein ungehindertes Abstreifen des Schmutzes zu erleichtern und eine Kontamination des Wagens 120 zu unterbinden. Die Öffnungen 170 können so beispielsweise Bohrungen zur Aufnahme von Schrauben oder anderen Befestigungsmitteln sein, mit denen die betreffende Schiene 110 an einem anderen Bauteil oder einem Fundament befestigt wird. Die Öffnungen 170 werden daher zum Teil auch als Befestigungsbohrungen bezeichnet.

Die Abdeckkappen 180, die beispielsweise aus einem metallischen Material, beispielsweise Messing oder Stahl, gefertigt sein können, und daher auch als Metallkappen bezeichnet werden, schließen nach dem Einbringen in die Öffnung 170 typischerweise im Wesentlichen bündig mit der Oberfläche 160 der Schiene 110 ab. Sie können so ein leichtes und sauberes Abstreifen von auf der Schiene 110 sich absetzenden Verunreinigungen durch den Wagen 120 ermöglichen. Auch können sie gegebenenfalls ein Eindringen von Verunreinigungen in die Öffnungen 170 unterbinden, zumindest jedoch reduzieren, sodass auch bei einem Überfahren einer Öffnung 170 durch den Wagen 120 die betreffenden Verunreinigungen nicht in das Innere des Wagens 120 gelangen.

Zu diesem Zweck weist der Wagen 120 an beiden Enden entlang der Schiene 110 jeweils eine Endplatte 200 mit einer Dichtung oder Dichtungsplatte 210 auf. Die Dichtungsplatte 210 kann hierbei beispielsweise derart ausgeführt sein, dass diese eine berührende Dichtung gegenüber der Schiene 110 bildet und so als Abstreifer für Verunreinigungen dient. Selbstverständlich können auch anstelle oder ergänzend zu der Dichtungsplatte 210 komplexere Dichtungssysteme eingesetzt werden, die beispielsweise eine Vorsatzdichtung umfassen.

Unter den zuvor beschriebenen Einsatzbedingungen kann daher der Einsatz von Abdeckkappen 180 gemäß einem Ausführungsbeispiel durch den zuvor beschriebenen, im Wesentlichen bündigen Abschluss an der Schienenoberfläche 160 eine gute Funktion der Dichtungsplatte 210, gegebenenfalls auch anderer Dichtungen im Rahmen des Wagens 120 gewährleisten.

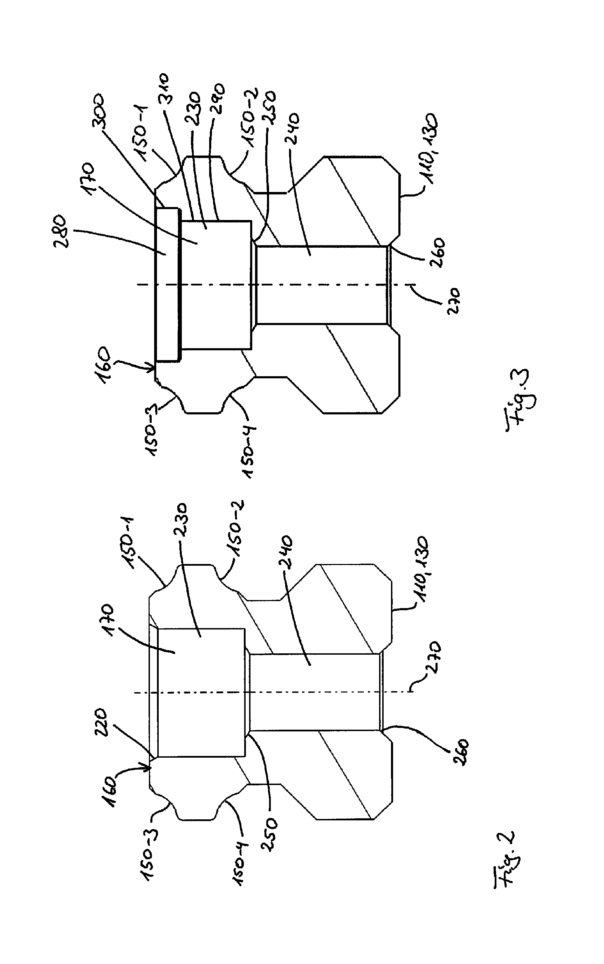

Fig. 2 zeigt eine Schiene 110, genauer gesagt eine Profilschiene 130, wie sie beispielsweise im Zusammenhang mit der Linearführung 100 aus Fig. 1 zum Einsatz kommen kann. Fig. 2 zeigt diese im Querschnitt im Bereich einer Öffnung 170. Hierbei ist die Öffnung 170 als Durchgangsbohrung ausgeführt und weist im Bereich der Oberfläche 160 eine Fase 220 auf. Die Öffnung 170 weist - abgesehen von der Fase 220 - ferner an der Oberfläche 160 eine Senkung 230 auf, die hinsichtlich ihrer Ausgestaltung derart ausgelegt ist, dass diese einen Schraubenkopf aufnehmen kann. Von der Senkung 230 ist ein weiterer Abschnitt 240 durch eine weitere Fase 250 getrennt. Die Öffnung 170 tritt an einer der Oberfläche 160 gegenüberliegenden Seite aus der Schiene 110 über eine zusätzliche Fase 260 aus. Der weitere Abschnitt 240 ist hierbei hinsichtlich seiner Ausgestaltung, insbesondere seiner Länge entlang einer Erstreckungsrichtung 270 der Öffnung 170 und seines Durchmessers auf die bereits zuvor genannte Schraube zur Befestigung der Schiene 110 ausgelegt.

Die Schiene 110 ist also für die Befestigung mit einer entsprechenden, als Bohrung ausgefiihrten Öffnung 170 mit der Außensenkung 230 für eine Senkkopfschraube sowie der Fase 220 versehen. Die Schraubenbohrungen können beispielsweise eine Durchmessertoleranz der Klasse H12, gegebenenfalls jedoch auch andere Toleranzklassen aufweisen. Weitere besondere Anforderungen werden jedoch häufig nicht an die entsprechende Ausgestaltung der Öffnungen 170 gestellt.

Fig. 3 zeigt eine Querschnittsdarstellung einer weiteren Schiene 110, die sich von der Querschnittsdarstellung der Schiene 110 aus Fig. 2 im Wesentlichen hinsichtlich der Ausgestaltung der Öffnung 170 im Bereich der Oberfläche 160 unterscheidet. So weist die in Fig. 3 dargestellte Schiene 110 anstelle der Fase 220 eine weitere Senkung 280 mit einem Durchmesser auf, der größer ist als der der Senkung 230. Eine Seitenwand 290 der Öffnung 170 weist daher einen ersten Abschnitt 300 auf, der im Wesentlichen durch die weitere Senkung 280 gegeben ist. Ein zweiter Abschnitt 310 der Seitenwand 290 wird durch die Senkung 230 gebildet. Der erste und der zweite Abschnitt 300, 310 weisen so jeweils eine Kontur senkrecht zu der Erstreckungsrichtung 270 auf, wobei die Kontur des zweiten Abschnitts 310 vollständig in oder innerhalb der des ersten Abschnitts 300 liegt.

Eine Kontur ist hierbei durch eine Projektion einer Umfangslinie in einer Querschnittsebene des betreffenden Objekts, also im vorliegenden Fall der betreffenden Abschnitte 300, 310 der Seitenwand 290 gegeben. Die Projektionsrichtung liegt hierbei im Wesentlichen parallel zu der angegebenen Richtung, während die Querschnittsebene hierbei im Wesentlichen senkrecht zu der angegebenen Richtung, also im vorliegenden Fall senkrecht zu der Erstreckungsrichtung 270 der Öffnung 170, liegt.

Je nach konkreter Ausgestaltung einer Abdeckkappe 180 gemäß einem Ausführungsbeispiel kann es hierbei ratsam sein, unterschiedliche Ausgestaltungen der Öffnungen 170 in der Schiene 110 vorzusehen. Eine Abdeckkappe 180 kann daher beispielsweise im Zusammenhang mit der in Fig. 2 gezeigten Standardschiene mit der Fase 220 verwendet werden. Es kann jedoch gegebenenfalls auch möglich sein, die Schiene 110 aus Fig. 2 dahin gehend nachzubearbeiten, dass diese anstelle der Fase 220 die weitere Senkung 280 aufweist, welche den ersten Abschnitt der Seitenwand 290 bildet. Hierdurch kann beispielsweise die in Fig. 3 dargestellte Schiene mit der weiteren Senkung 280 für die Abdeckkappe 180 erhalten werden.

Ein Nacharbeiten der Öffnungen 170 kann dabei mit höheren Kosten und einer höheren Ungenauigkeit behaftet sein, als wenn die Schiene 110 bereits im Rahmen ihrer Herstellung mit der entsprechenden weiteren Senkung 280 versehen wird. Unabhängig hiervon kann es jedoch gegebenenfalls trotzdem ratsam sein, eine Schiene 110, wie sie in Fig. 3 dargestellt ist, durch ein Nacharbeiten einer Schiene 110, wie sie in Fig. 2 dargestellt ist, herzustellen, wenn beispielsweise eine Bevorratung problematisch sein kann. Selbstverständlich ist es jedoch auch möglich, die entsprechende Öffnung 170 bereits bei der Herstellung der Schiene 110 zu implementieren.

Die Verwendung der Schiene 110 aus Fig. 2 kann jedoch gegebenenfalls nicht zu einem idealen Verschließen der Schiene 110 führen. So besteht bei der Verwendung dieser Schiene 110 aufgrund ihrer Fase 220 die Möglichkeit, dass die Abdeckkappe 180 die Schiene 110 gegebenenfalls nicht vollständig bündig abschließt. Es kann so eine ringförmige Ausnehmung um die Abdeckkappe bestehenbleiben, die durch die Fase 220 hervorgerufen wird. In dieser können sich gegebenenfalls Schmutzpartikel, andere Fremdkörper oder korrosiv wirkende Stoffe (z. B. Kühlflüssigkeit) ansammeln, die zu einer Beschädigung der Schiene 110, des Wagens 120 oder einer Komponente aus dem Umfeld des Wagens 120 oder der Schiene 110 führen kann.

So kann es gegebenenfalls ratsam sein, eine Schiene 110 im Zusammenspiel mit einer Abdeckkappe 180 einzusetzen, bei der die weitere Senkung 280 der Schiene 110 mit ihrer Oberfläche 160 eine scharfe Kante bildet. Weist die Abdeckkappe 180 im Bereich ihrer Deckfläche 190 ebenso eine entsprechende scharfe Kante auf, kann so gegebenenfalls ein vollständig bündiger Abschluss der Schiene 110 erreicht werden.

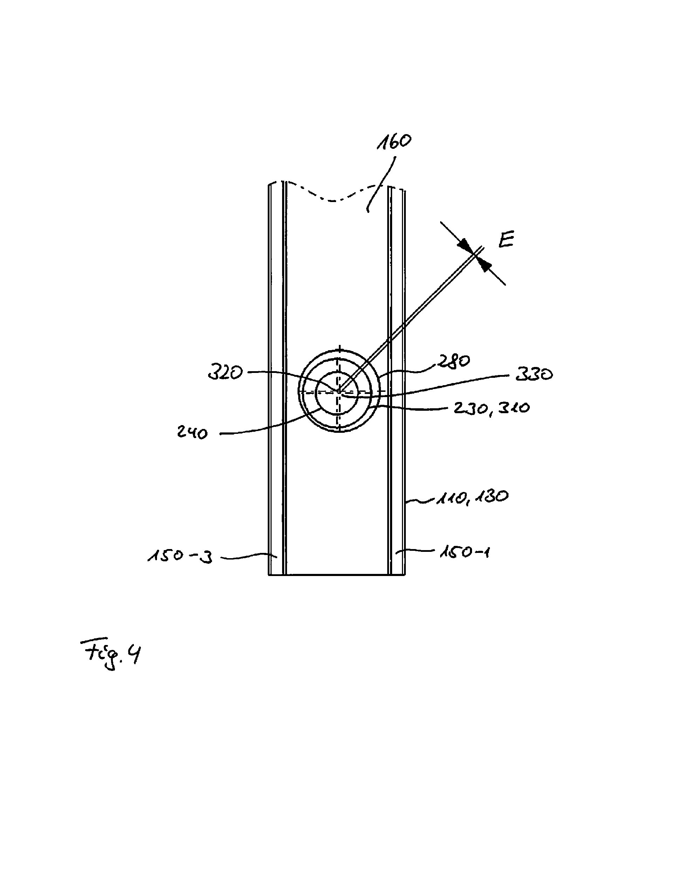

Fig. 4 illustriert anhand einer Aufsicht auf eine Schiene 110 in Form einer Profilschiene 130 das zuvor erwähnte Problem der Genauigkeit im Bereich der weiteren Senkung 280. So zeigt Fig. 4 eine Aufsicht auf die Schiene 110 mit einer Öffnung 170, die den in Fig. 3 gezeigten Querschnitt aufweist. Dieser ist jedoch durch nachträgliches Einführen der weiteren Senkung 280 erzeugt worden. Die Nacharbeit der in Fig. 2 aufgezeigten Standardschiene 110 führt im vorliegenden Fall dazu, dass ein Mittelpunkt 320 der Senkung 230, die den zweiten Abschnitt 310 bildet, und des weiteren Abschnitts 240 von einem Mittelpunkt 330 der weiteren Senkung 280 unterscheidet. Es kommt so zu einer Exzentrizität E zwischen der Senkung 230 für den Schraubenkopf und der weiteren Senkung 280 für die Abdeckkappe 180. Die Exzentrizität E stellt eines der möglichen Koaxialitätsprobleme dar, die im Rahmen einer Nachbearbeitung auftreten können. Ebenso kann gegebenenfalls die weitere Senkung 280 unter einem von 90° abweichenden Winkel zu der Oberfläche 160 in die Schiene 110 eingebracht werden und so gegebenenfalls schräg verlaufen. Hierdurch kann gegebenenfalls ein Sitzen der Abdeckkappe 180 nachteilig beeinflusst werden. Aber auch andere fertigungsbedingte Abweichungen können so auftreten.

Bei einer herstellerseitig bereitgestellten Öffnung 170 mit einer Kontur, wie sie beispielsweise in Fig. 3 gezeigt ist, kann diese beispielsweise durch den Einsatz eines Sonderwerkzeugs, gegebenenfalls jedoch auch durch eine entsprechende Ansteuerung einer CNC-Maschine erzeugt werden.

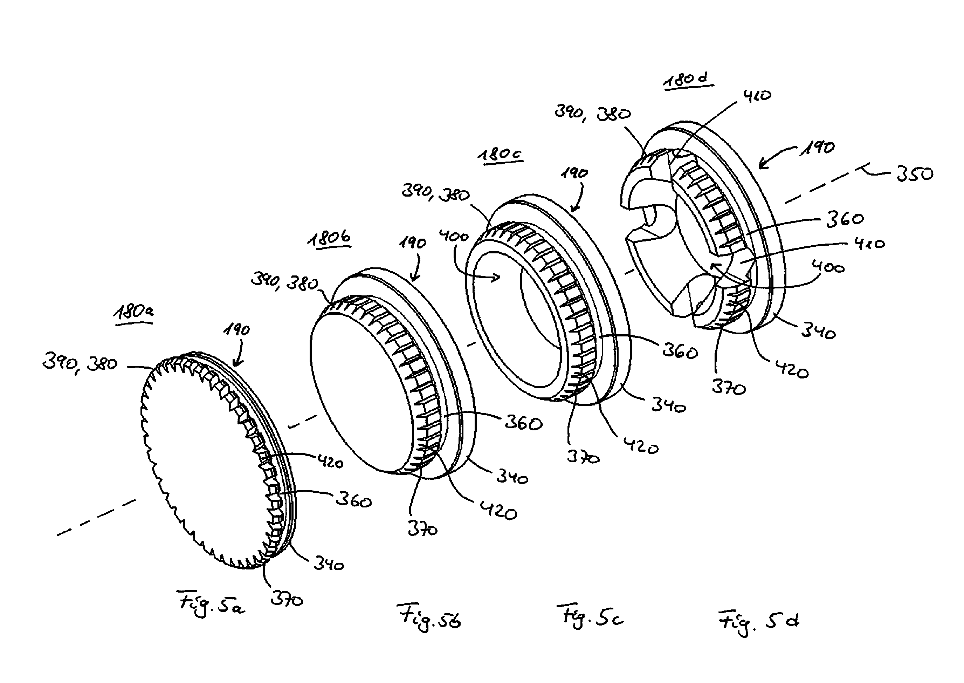

Die Fig. 5a bis 5d zeigen jeweils perspektivische Darstellungen einer Abdeckkappe 180 gemäß einem Ausführungsbeispiel. Zur Unterscheidung der in den Fig. 5a bis 5d gezeigten Abdeckkappen 180 werden diese im weiteren Verlauf der Beschreibung der Ausführungsbeispiele als Abdeckkappen 180a (Fig. 5a), 180b (Fig. 5b), 180c (Fig. 5c) und 180d in Fig. 180d (Fig. 5d) bezeichnet.

Die Abdeckkappen 180, wie sie in den Fig. 5a bis 5d gezeigt sind, weisen jeweils eine Deckfläche 190 auf, die so ausgebildet ist, dass die Öffnungen 170 im Wesentlichen bündig mit der Oberfläche 160 der Schiene 110 verschließbar sind. Sie sind daher im vorliegenden Fall im Wesentlichen als ebene Flächen ausgeführt. Hierbei kann es - wie die nachfolgende Erörterung noch zeigen wird - jedoch gegebenenfalls darauf ankommen, im Rahmen welcher Schiene 110 diese eingesetzt werden.

Die Abdeckkappen 180 weisen ferner einen ersten Seitenflächenbereich 340 auf, der parallel zu einer vorbestimmten Richtung 350 ausgerichtet ist. Die vorbestimmte Richtung 350 ist hierbei für alle in Fig. 5a bis 5d gezeigten Ausführungsbeispiele einer Abdeckkappe 180 gleich. Sie stimmt im eingesetzten Zustand im Wesentlichen mit der Erstreckungsrichtung 270 der Öffnung 170 überein.

Darüber hinaus weisen die Abdeckkappen 180 jeweils einen zweiten Seitenflächenbereich 360 auf, der eine Kontur senkrecht zu der vorbestimmten Richtung 350 aufweist, die gegenüber einer Kontur des ersten Seitenflächenbereichs 340 entlang der vorbestimmten Richtung 350 zurückversetzt ist. Die Kontur des zweiten Seitenflächenbereichs 360 ist so auf ein Inneres der Kontur des ersten Seitenflächenbereichs 340 hin versetzt. Der erste Seitenflächenbereich 340 und der zweite Seitenflächenbereich 360 sind hierbei als im Wesentlichen vollständig rotationssymmetrisch ausgestaltet, sodass die vorbestimmte Richtung 350 mit einer Symmetrieachse der betreffenden Seitenflächenbereiche 340, 360 übereinstimmt. Im vorliegenden Fall weist daher der zweite Seitenflächenbereich 360 gegenüber dem ersten Seitenflächenbereich 340 einen geringeren radialen Abstand von der vorbestimmten Richtung 350 auf.

Bei anders ausgestalteten Abdeckkappen 180 kann hierbei gegebenenfalls eine andere Ausgestaltung mit entsprechenden Konturen vorliegen. So können beispielsweise der erste Seitenflächenbereich 340 und die an diese sich unmittelbar anschließende Deckfläche 190 auch eine andere Gestalt bzw. Kontur aufweisen, die jedoch im Wesentlichen der Kontur der entsprechenden Öffnung 170 in der Schiene 110 entspricht. Dadurch, dass die Kontur des zweiten Seitenflächenbereichs 360 gegenüber der des ersten Seitenflächenbereichs 340 zurückversetzt ist, wird wenigstens teilweise ein Auffangraum gebildet, der zur Aufnahme eines sich bei einem Einsetzen der Abdeckkappen 180 lösenden Partikels dienen kann. Die in den Fig. 5a bis 5d gezeigten Abdeckkappen 180 umfassen ferner einen dritten Seitenflächenbereich 370, der sich wenigstens abschnittsweise parallel zu der vorbestimmten Richtung 350 erstreckt. Er weist ebenfalls eine Kontur senkrecht zu der vorbestimmten Richtung 350 auf, die wenigstens teilweise über die Kontur des zweiten Seitenflächenbereichs 360 hinaus steht. Der dritte Seitenflächenbereich 370 ist hierbei so ausgebildet, um mit der Seitenwand 290 der Öffnung 170 eine Presspassung zu bilden.

Während der dritte Seitenflächenbereich 370 gerade so ausgebildet ist, dass dieser eine Presspassung mit der Seitenwand 290 der Öffnung 170 bildet, ist der erste Seitenflächenbereich 340 bei vielen Ausführungsbeispielen so ausgebildet, dass dieser eine Übergangspassung oder eine Spielpassung mit der Seitenwand 290 bildet. Hierdurch kann eine Spanbildung im Bereich des ersten Seitenflächenbereichs 340 gegebenenfalls vermieden werden, sodass lediglich beim Einsetzen der Abdeckkappe 180 in die Öffnung 170 im Bereich des dritten Seitenflächenbereichs 370 ein entsprechender Partikel, also beispielsweise ein Metallspan, entsteht. Dieser kann dann in dem durch die zurückgezogene Kontur des zweiten Seitenflächenbereichs 360 wenigstens teilweise gebildeten Auffangraum aufgenommen werden und dort verbleiben.

Der Auffangraum wird hierbei hinsichtlich seines Volumens nicht zuletzt durch die Höhe des zweiten Seitenflächenbereichs 360 entlang der vorbestimmten Richtung 350 bestimmt. Im Interesse einer möglichst kompakten Abdeckkappe 180 und in Anbetracht der Tatsache, dass typischerweise beim Einsetzen der Abdeckkappen 180 in die Öffnungen 170 die Partikelgröße der hierbei entstehenden Partikel eher gering ist, kann häufig die Höhe auf höchstens 5 mm beschränkt werden. Gegebenenfalls kann es sogar möglich sein, die Höhe des zweiten Seitenflächenbereichs weiter, beispielsweise auf höchstens 2 mm, höchstens 1 mm, höchstens 0,5 mm, höchstens 0,2 mm oder höchstens 0,1 mm zu beschränken. So kann der zweite Seitenflächenbereich 360 beispielsweise in Form eines Hinterstichs und/oder eines Einstichs gebildet sein.

Die in den Fig. 5a bis 5d gezeigten Abdeckkappen 180 weisen ferner Verzahnungsstrukturen 380 auf, die als Teil der dritten Seitenflächenbereiche 370 gebildet sind. Die Verzahnungsstrukturen 380 sind bei den hier gezeigten Ausführungsbeispielen als Rändelung 390, genauer gesagt als axial ausgerichtete Rändelung ausgeführt. Es können jedoch gegebenenfalls auch andere Rändelungen verwendet werden. Hierdurch kann es möglich sein, die Abdeckkappe 180 gerade im Randbereich weicher auszugestalten, sodass sich diese an gegebenenfalls mit einer größeren Toleranz hergestellter Öffnungen 170 in der Schiene 110 leichter anpassen kann. So kann durch den Einsatz der entsprechenden Verzahnungsstrukturen 380 bzw. der entsprechenden Rändelungen 390 gegebenenfalls eine Anforderung an die Genauigkeit der Öffnung 170 und ihrer Fertigung reduziert werden.

So ist im Rahmen von Vorversuchen beim Einsetzen von Metallkappen mit einer glatten, runden seitlichen Oberfläche festgestellt worden, dass der Durchmesser der betreffenden Senkung, also beispielsweise der weiteren Senkung 280, mit einer hohen Genauigkeit gefertigt sein sollte, um ein problemfreies Einsetzen der Abdeckkappe 180 zu ermöglichen. Um in diesem Bereich die Anforderungen an die Schiene 110 und ihre Öffnungen 170 nicht übermäßig zu steigern, kann daher bei einer Abdeckkappe 180 gemäß einem Ausführungsbeispiel die zuvor beschriebene Verzahnungsstruktur 380, also beispielsweise die Rändelung 390, im dritten Seitenflächenbereich 370 vorgesehen werden. Durch die gerändelte seitliche Oberfläche an der Abdeckkappe können so gegebenenfalls Toleranzen der Herstellung der Senkung reduziert werden.

Bei der Fertigung der Abdeckkappe 180 gemäß einem Ausführungsbeispiel können vergleichsweise einfache Fertigungsverfahren, wie etwa das Rändeln, eingesetzt werden, die es ermöglichen, die oben beschriebenen Anforderungen zu erfüllen. Das Rändeln stellt hierbei eine einfache und damit kostengünstige Form der Herstellung der Verzahnungsstruktur 380 dar. Es wird beispielsweise beim Herstellen von Griffen und Griffflächen, beispielsweise für Messschrauben, jedoch auch zur Verbesserung einer Welle-Nabe-Verbindung verwendet, um so eine Erhöhung des übertragbaren Drehmoments zwischen der Welle und an der Welle befestigten Bauteilen zu ermöglichen. Die Abdeckkappen 180, bei denen die Verzahnungsstruktur 380 durch ein Rändeln erzeugt wurde, werden daher auch als gerändelte Abdeckkappen bezeichnet. Selbstverständlich können jedoch auch andere Herstellungsverfahren zur Herstellung der Verzahnungsstruktur 380 verwendet werden.

Die Verzahnungsstrukturen 380 stellen bei Ausführungsbeispielen jedoch keine zwingende Ausgestaltung dar. So kann im Rahmen eines Ausführungsbeispiels eine Verzahnungsstruktur 380 an dem dritten Seitenflächenbereich 370 gegebenenfalls auch entfallen. Durch das Vorsehen der Verzahnungsstrukturen 380, also beispielsweise der Rändelungen 390, hat sich im Rahmen von Probemontagen gezeigt, dass die Problematik des Lösens von Partikeln, also beispielsweise von Spänen, bei dem Einsetzen oder Einpressen der Abdeckkappe 180, verstärkt wurde. So sammeln sich bei einer Abdeckkappe ohne einen entsprechenden Auffangraum typischerweise die Partikel auf der Oberfläche 160 der Schiene 110 an und können gegebenenfalls durch das zum Einpressen erforderliche Hilfswerkzeug hierbei platt gedrückt werden. Diese Partikel verschlechtern gegebenenfalls nicht nur die Qualität der Bündigkeit der betreffenden Oberflächen zueinander, sie müssen gegebenenfalls auch nachträglich im Rahmen eines zusätzlichen Arbeitsgangs beseitigt werden, um Schäden an dem Wagen 120 bei einem Überfahren der betreffenden Partikel zu vermeiden.

Bei dem entsprechenden Reinigungsvorgang besteht zudem die Gefahr, dass die Schiene 110 gegebenenfalls beschädigt wird. Ebenso besteht das Risiko der Beschädigung der Dichtung oder Dichtungsplatte 210 des Wagens 120 bzw. die Gefahr des Eindringens der Partikel in den Wagen 120, wodurch gegebenenfalls weitere Folgeschäden hervorgerufen werden können.

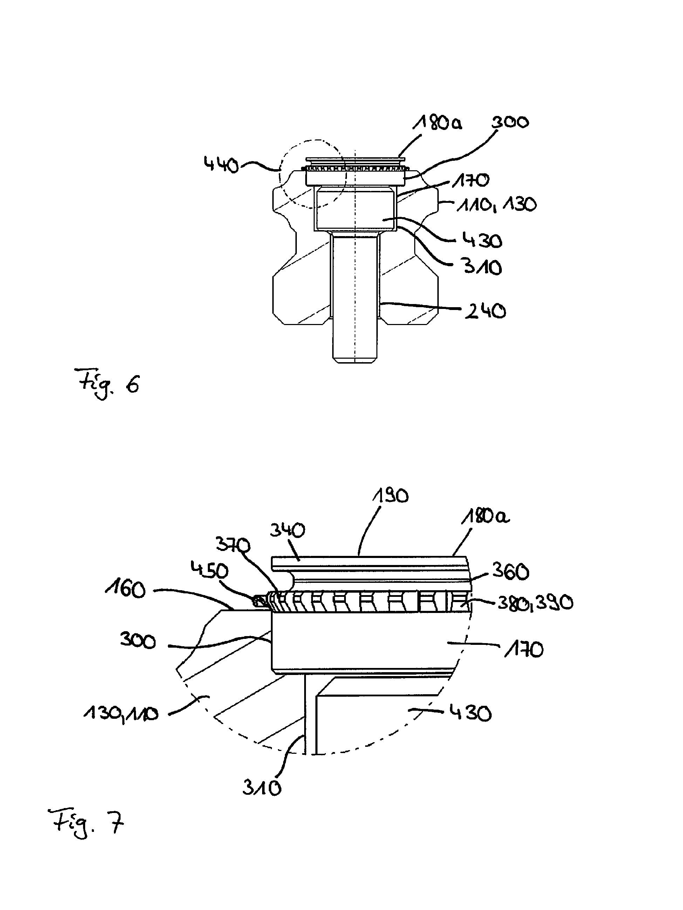

Ausführungsbeispiele einer Abdeckkappe 180 basieren nun gerade auf der Idee, als Einpressfläche die bereits vorhandene Senkung in der Schiene 110 zu benutzen, und durch die zurückgesetzte Kontur des zweiten Seitenflächenbereichs 360 wenigstens teilweise einen Auffangraum für die häufig unvermeidliche Partikel- bzw. Spanbildung unterhalb der im Wesentlichen bündig schließenden Abdeckkappe vorzusehen. Hierdurch kann gegebenenfalls vermieden werden, dass Späne und andere Partikel an die Schienenoberfläche 160 gelangen. Wie die nachfolgende Beschreibung der Ausführungsbeispiele, insbesondere der Fig. 6 bis 13, noch zeigen wird, deuten Ergebnisse an Musterteilen an, dass dies erzielbar sein kann.

Während bei dem in Fig. 5a gezeigten Ausführungsbeispiel einer Abdeckkappe 180a die Konturen - abgesehen von der Verzahnungsstruktur 380 - des ersten Seitenflächenbereichs 340 und des dritten Seitenflächenbereichs 370 im Wesentlichen übereinstimmen, ist bei den in den Fig. 5b bis 5d gezeigten Ausführungsbeispielen der Abdeckkappen 180b bis 180d die Kontur senkrecht zu der vorbestimmten Richtung 350 des dritten Seitenflächenbereichs 370 gegenüber der Kontur des ersten Seitenflächenbereichs 340 zurückversetzt. Genauer gesagt sind bei den hier gezeigten Ausführungsbeispielen die Konturen der jeweiligen ersten und dritten Seitenflächenbereiche 340, 370 im Wesentlichen formenmäßig identisch. Noch genauer gesagt sind sie im vorliegenden Fall sogar - abgesehen von der optionalen Verzahnungsstruktur 380 - im Wesentlichen kreisrund. Hierdurch kann die Erzeugung der Partikel, also beispielsweise der Metallspäne beim Einpressen der Abdeckkappen 180 in die Öffnungen 170 gezielt tiefer in das Innere der Schiene 110 verlagert werden.

Je nach konkreter Implementierung kann die in Fig. 5b gezeigte Lösung eine Abdeckkappe 180 jedoch gegebenenfalls eine höhere Genauigkeit im Hinblick auf die Koaxialität der weiteren Senkung 280 für die Abdeckkappe 180 und die Senkung 230 für den Schraubenkopf stellen. Im Fall der Fertigung der Senkungen im Rahmen der Serienherstellung bzw. des Serienprozesses stellt dies typischerweise kein Problem dar. Im Falle einer Nacharbeitung einer Standardschiene könnte es jedoch gegebenenfalls zu größeren Schwankungen und damit einhergehenden Koaxialitätsungenauigkeiten kommen.

Um auch solchen Problemen wenigstens teilweise vorbeugen zu können, weist das in Fig. 5c gezeigte Ausführungsbeispiel der Abdeckkappe 180c eine Ausnehmung 400 auf, die sich von einer der Deckfläche 190 abgewandten Seite ausgehend in die Abdeckkappe 180c wenigstens teilweise in einen Bereich hinein erstreckt, der durch den dritten Seitenflächenbereich 370 seitlich begrenzt wird. Genauer gesagt erstreckt sich die Ausnehmung 400 bei der Abdeckkappe 180c aus Fig. 5c vollständig durch den oben genannten Bereich hindurch.

Hierdurch kann eine Flexibilität der Abdeckkappe 180 in diesem Bereich gegebenenfalls noch weiter gesteigert werden, sodass auch größere Schwankungen hinsichtlich der Koaxialitätsgenauigkeit verzeihbar werden können. Die Abdeckkappe 180c kann so geringfügig robuster ausgeführt werden und kann gegebenenfalls durch die zuvor beschriebene Ausnehmung 400 größere Ungenauigkeiten, also beispielsweise Durchmesserschwankungen und andere Koaxialitätsprobleme, ausgleichen, ohne dass sich diese an der Oberfläche 160 der Schiene 110 nach dem Einpressen der Abdeckkappen bemerkbar machen. Die in Fig. 5c gezeigte Abdeckkappe 180c stellt so eine Hohlversion derselben dar, bei der mehr Elastizität durch das Vorsehen der Ausnehmung 400 und damit ein größerer Toleranzausgleich möglich sein können.

Bei der in Fig. 5d gezeigten Abdeckkappe 180d gemäß einem Ausführungsbeispiel ist der dritte Seitenflächenbereich 370 segmentiert ausgeführt. So weist der dritte Seitenflächenbereich 370 in dem dort gezeigten Ausführungsbeispiel eine Mehrzahl weiterer Ausnehmungen 410 auf, die mit der Ausnehmung 400 in Kontakt stehen und so zu den beschriebenen Segmenten des dritten Seitenflächenbereichs 370 führen. Die weiteren Ausnehmungen 410 können so etwa eine Schlitzform aufweisen, der dritte Seitenflächenbereich 370 also geschlitzt ausgeführt sein.

So umfasst der dritte Seitenflächenbereich 370 der Abdeckkappe 180d insgesamt vier Segmente, die sich über einen Winkelbereich von etwas weniger als 90° jeweils erstrecken. Selbstverständlich kann bei anderen Ausführungsbeispielen die Segmentierung des dritten Seitenflächenbereichs 370 auch hinsichtlich Form, Anzahl der Segmente und ihrer Ausgestaltung anders ausgeführt werden. Durch die Segmentierung des auch als Einpresskontur bezeichneten dritten Seitenflächenbereichs 370 kann hierdurch gegebenenfalls ein noch größerer Toleranzausgleich möglich sein.

Eingangs der Beschreibung der Fig. 5a bis 5d wurde kurz erwähnt, dass der dritte Seitenflächenbereich 370 sich wenigstens abschnittsweise, wenn nicht vollständig parallel zu der vorbestimmten Richtung 350 erstreckt. Die Abdeckkappen 180a bis 180d weisen so im Bereich der dritte Seitenflächenbereich 370 jeweils eine Fase 420 auf, die an einem der Deckfläche 190 abgewandten Ende der betreffenden Abdeckkappe 180 angeordnet ist und so ein Einsetzen der Abdeckkappe 180 in die Öffnung 170 erleichtert. Die Fasen 420 können jedoch gegebenenfalls auch entfallen.

Grundsätzlich können Abdeckkappen 180 gemäß einem Ausführungsbeispiel aus jedem Material gefertigt werden, welches den betreffenden Einsatzbedingungen Stand hält. Wie die Erörterung zuvor gezeigt hat, kann es jedoch hilfreich sein, die Abdeckkappe 180 aus einem entsprechenden Material zu fertigen, welches eine solche Elastizität aufweist, sodass die Abdeckkappe mit dem dritten Seitenflächenbereich eine Presspassung mit der Seitenwand 290 der Öffnung bilden kann. So kann die Abdeckkappe beispielsweise aus einem metallischen Material, beispielsweise Messing oder Stahl, gefertigt sein, weshalb diese manchmal auch als Metallkappen bezeichnet werden. Sie kann jedoch auch aus anderen elastischen Metallen oder Werkstoffen gefertigt werden. Auch kann eine solche Abdeckkappe 180 auch einstückig gefertigt sein, um beispielsweise die Herstellung zu vereinfachen.

Eine Abdeckkappe 180 gemäß einem Ausführungsbeispiel kann so eine robuste, kostengünstige und gleichzeitig zuverlässige Befestigung in den Öffnungen 170 einer Schiene, also beispielsweise einer entsprechenden Schraubenbohrung derselben, ermöglichen. Durch die Ausgestaltung der Abdeckkappen 180 kann es gegebenenfalls möglich sein, dass beim Einpressen der Abdeckkappen 180 möglichst keine Partikel, etwa Metallspäne, an die Oberfläche 160 der Schiene 110 gelangen. So können die Partikel in dem Auffangraum aufgenommen werden und so von der Oberfläche 160 ferngehalten werden. Die Partikel können so beispielsweise beim Verschieben des entsprechenden Wagens 120 seine Dichtungsplatte 210, die beispielsweise als Standarddichtung ausgeführt ist, oder seine Vorsatzdichtungen beschädigen, sofern diese vorgesehen sind. Ebenso können sie gegebenenfalls im Falle einer Ausführung als Profilschienenwagen in seinen Wälzkörperumlauf (z. B. Kugelumlauf) gelangen und dort weitere Folgeschäden hervorrufen.

Eine Abdeckkappe 180 gemäß einem Ausführungsbeispiel kann so häufig ohne erhöhte Anforderungen an die Fertigungsgenauigkeit der Abdeckkappe selbst und der Öffnungen 170 hergestellt werden. Durch den Einsatz der Verzahnungsstruktur 380 können gegebenenfalls auftretende Fertigungsschwankungen bei der Herstellung der Öffnung 170 und ihrer Senkungen (beispielsweise der weiteren Senkung 280) in der Schiene 110 kompensiert werden. So kann es möglich sein, durch den Einsatz der Verzahnungsstruktur 380, gegebenenfalls auch durch die zusätzliche Ausnehmung 400 und/oder die segmentierte Ausführung des dritten Seitenflächenbereichs 370, Variationen hinsichtlich des Durchmessers der Öffnung, der Koaxialität der verschiedenen Senkungen 230, 280 zu kompensieren. Je nach konkreter Ausgestaltung kann so gegebenenfalls nach dem Einpressen der Abdeckkappe 180 eine Nachbearbeitung der Schiene 110, also beispielsweise ein Säubern der Schienenoberfläche 160, entfallen. Durch das Design der Abdeckkappe 180 können so beim Einpressen entstandene Späne und andere Partikel gegebenenfalls unterhalb der Abschlusskontur verbleiben und gelangen nicht so an die Schienenoberfläche 160.

Wie bereits zuvor erläutert wurde, kann selbst im Falle einer Abdeckkappe, bei der das Vorsehen der weiteren Senkung 280 von Vorteil ist, ihre Fertigung auch im Rahmen einer Nacharbeit an einer Schiene 110 durchgeführt werden, bei der die entsprechende Senkung 280 nicht implementiert ist. Gerade bei einer Abdeckkappe 180, bei der der dritte Seitenflächenbereich 370 hinsichtlich seiner Kontur gegenüber der Kontur des ersten Seitenflächenbereichs 340 zurückgezogen ist, kann so durch die sich so ergebenden Kontur- bzw. Durchmesserunterschiede ein Verwechseln der Abdeckkappenoberseite und der Abdeckkappenunterseite bei der Montage durch den betreffenden Bearbeiter typischerweise hinsichtlich einer Wahrscheinlichkeit deutlich reduziert werden. Diese Wahrscheinlichkeit kann gegebenenfalls weiter reduziert werden, wenn die Abdeckkappe 180 eine entsprechende Oberflächenbeschaffenheit aufweist, die die Oberseite und die Unterseite voneinander leicht unterscheidbar macht. So kann die Deckfläche 190 beispielsweise glatt ausgeführt sein, während - je nach konkreter Implementierung eines Ausführungsbeispiels - die der Deckfläche 190 abgewandte Seite die Verzahnungsstruktur 380 oder die Ausnehmung 400 aufweist, also gerändelt und/oder ausgehöhlt ausgeführt ist.

Abdeckkappen 180 gemäß einem Ausführungsbeispiel können so robuste Abdeckkappen für Befestigungsbohrungen und andere Öffnungen 170 an Profilschienen 130 und ähnlichen Schienen 110 verwandter Linearführungen verwendet werden.

Fig. 6 zeigt eine Querschnittsdarstellung der in Fig. 3 dargestellten Schiene 110, wobei in der Öffnung 170 eine Schraube 430, die auf Höhe des zweiten Abschnitts 310 und des weiteren Abschnitts 240 angeordnet ist. Die Schraube 430 erstreckt sich hierbei jedoch nicht bis in den ersten Abschnitt 300. Die Querschnittsdarstellung aus Fig. 6 zeigt ferner die Abdeckkappe 180a, wie sie in Fig. 5a gezeigt ist, in einer Position kurz bevor bzw. während des Eindrückens derselben in die Öffnung 170. Fig. 6 zeigt darüber hinaus über einen Kreis einen in Fig. 7 vergrößerten Ausschnitt 440.

Fig. 7 zeigt so den ersten Seitenflächenbereich 340, den gegenüber dem ersten Seitenflächenbereich 340 zurückgezogenen zweiten Seitenflächenbereich 360 sowie den dritten Seitenflächenbereich 370 mit der dort angebrachten Verzahnungsstruktur 380, die in Form der Rändelung 390 ausgeführt ist. Bei der Abdeckkappe 180a weisen hier bei der dritte Seitenflächenbereich 370 und der erste Seitenflächenbereich 310 im Wesentlichen den gleichen Durchmesser auf. Dieser stimmt etwa mit dem Durchmesser bzw. der Kontur des ersten Abschnitts 300 der Öffnung 170 überein. Aus diesem Grund kann es bei der Abdeckkappe 180a gemäß einem Ausführungsbeispiel im Zusammenspiel mit der hier gezeigten Schiene 110 aus Fig. 3 dazu kommen, dass bereits zu Beginn des Einpressens bzw. Einsetzens der Abdeckkappe 180a eine Spanbildung im Bereich der Kante zwischen der Oberfläche 160 der Schiene und der Öffnung 170 auftritt, wenn Druck vonseiten der Deckfläche 190 auf die Abdeckkappe 180a ausgeübt wird. So zeigt Fig. 7 schematisch einen entsprechenden Span bzw. Partikel 450.

Es kann also trotz der Verwendung der Abdeckkappe 180a gemäß einem Ausführungsbeispiel bei dem Beginn des Einpressverfahrens der Abdeckkappe 180 in die Öffnung 170 zu einem Bilden bzw. Lösen des Partikels 450 kommen, der aufgrund der geometrischen Ausgestaltung von Abdeckkappe 180a und Öffnung 170 im vorliegenden Fall gegebenenfalls trotzdem im Bereich der Oberfläche 160 der Schiene 110 am Ende des Einpressens anzutreffen sein kann.

Im Falle der Verwendung einer solchen Abdeckkappe 180a kann es daher gegebenenfalls sinnvoll sein, diese im Zusammenspiel mit einer in Fig. 2 gezeigten Schiene 110 zu verwenden, die im Bereich der Oberfläche 160 die Fase 220 aufweist. Durch das entsprechende Einpressen der Abdeckkappe 180a in die in Fig. 2 gezeigte Schiene 110 kann so trotz der Fase 220 die Öffnung 170 im Wesentlichen bündig verschlossen werden, wobei gegebenenfalls eine kleine, beispielsweise ringförmige Ausnehmung um die Abdeckkappe 180a zurückbleiben könnte.

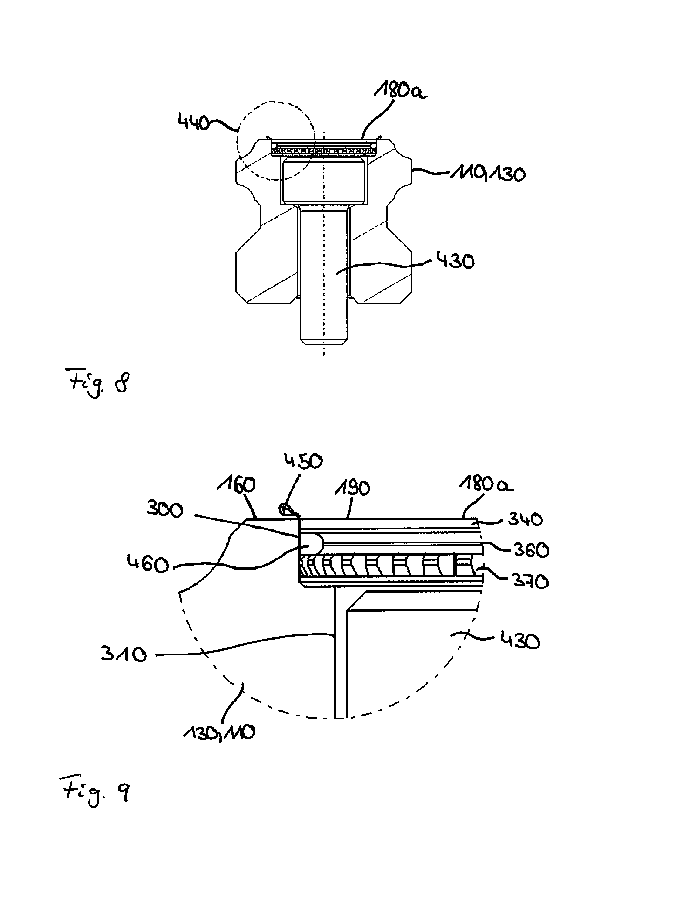

So zeigt Fig. 8 die Komponenten der Fig. 6 in einem eingepressten Zustand, bei dem die Abdeckkappe 180a die Öffnung 170 im Wesentlichen bündig verschließt. Fig. 9 zeigt in diesem Zusammenhang wiederum den in Fig. 8 eingezeichneten Ausschnitt 440 in einer vergrößerten Darstellung.

Fig. 9 illustriert, dass es bei den hier dargestellten Situationen passieren kann, dass der Partikel 450 trotz des im Bereich des ersten Abschnitts 300 der Öffnung 170 (nicht mit einem Bezugszeichen in Fig. 9 bezeichnet) und dem zweiten Seitenflächenbereich 360 gebildeten Auffangraum 460 an der Oberfläche 160 der Schiene 110 entstehen kann. Anders ausgedrückt können gegebenenfalls durch den Einsatz der Abdeckkappe 180a im Zusammenspiel mit der in Fig. 3 gezeigten Schiene 110 dennoch Späne und andere Partikel 450 auf der Oberfläche 160 der Schiene bei dem Einpressen erzeugt werden. Durch den Einsatz einer Schiene 110, wie sie beispielsweise in Fig. 2 dargestellt ist, kann durch das Vorsehen der Fase 220 dies im Zusammenspiel mit der Abdeckkappe 180a gegebenenfalls unterbunden werden.

Die Fig. 6 bis 9 illustrieren so, dass durch eine gegebenenfalls ungeschickte Kombination von Abdeckkappe 180 und Schiene 110 auch eine Partikelbildung derart erfolgen kann, dass die betreffende Partikel trotzdem an die Oberfläche gelangen können. Wird so die in Fig. 5a gezeigte Abdeckkappe mit der in Fig. 2 gezeigten Schiene 110 kombiniert, wird der Ort der Partikelbildung durch die Fase 220 nach unten in die Schiene 110 hinein verlegt. In einem solchen Fall kann der Auffangraum 460 einen sich bildenden Span mit einer deutlich größeren Wahrscheinlichkeit an einem Vordringen zur Oberfläche hindern.

Diese Variante kann jedoch gegebenenfalls nicht für alle Anwendungsszenarien gleichermaßen geeignet sein. So verbleibt typischerweise aufgrund der Fase 220 eine kleine ringförmige Ausnehmung im Bereich der Oberfläche 160, in der sich Verunreinigungen oder andere Medien absetzen und ansammeln können. Diese können bei einem Überfahren der Ausnehmung durch den Wagen 120 gegebenenfalls aufgewirbelt werden und in das Innere des Wagens 120 gelangen. Dort können sie gegebenenfalls zu Schäden führen. Auch kann sich gegebenenfalls in der Ausnehmung ein flüssiges Medium ansammeln, das den Wagen 120 oder die Schiene 110 beschädigen könnte. Dies kann beispielsweise bei korrosiven Medien (z. B. Kühlflüssigkeit) der Fall sein.

Die Kombination der Abdeckkappe 180a mit der in Fig. 2 gezeigten Schiene 110 kann dennoch auch bei waagerechtem Einbau an einem Boden einen Schutz der in der Öffnung 170 befindlichen Komponenten und Strukturen ermöglichen. Sind also beispielsweise Risiken durch Verschmutzung oder Kontamination durch korrosive Medien gering, kann die beschriebene Kombination auch bei waagerechtem Einbau an einem Boden sehr hilfreich sein. Wird hingegen die Schiene 110 gegenüber der Horizontalen gekippt eingebaut oder "über Kopf" kann diese Kombination gegebenenfalls auch bei entsprechend belasteten Einsatzbedingungen verwendet werden.

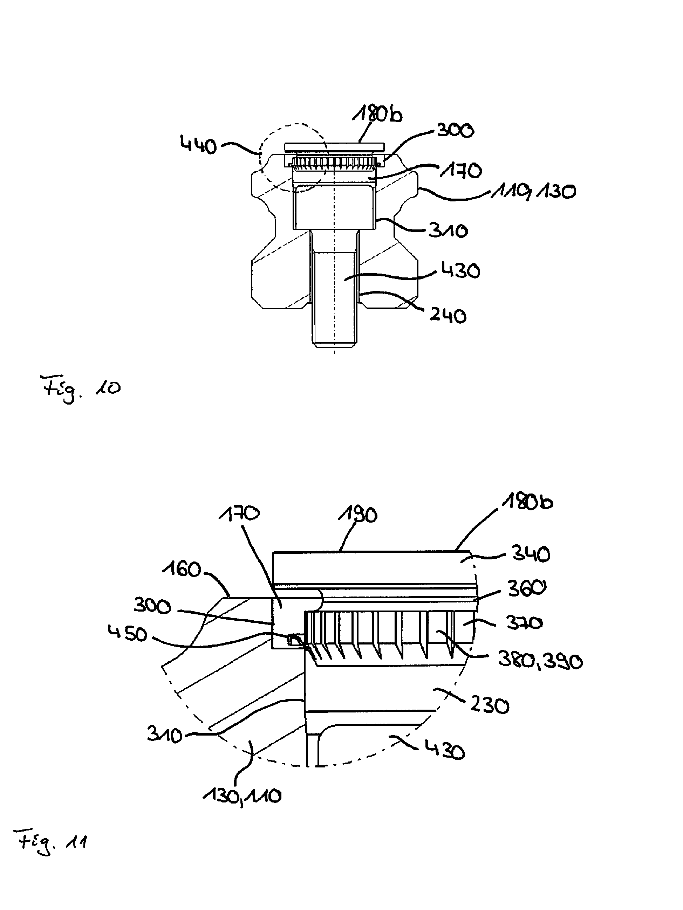

Fig. 10 zeigt eine Fig. 6 vergleichbare Querschnittsdarstellung durch die Schiene 110, wie sie in Fig. 3 gezeigt ist, in der wiederum die Schraube 430 derart angeordnet ist, dass diese sich durch den zweiten Abschnitt 310 und den weiteren Abschnitt 240 der Öffnung 170 hindurch erstreckt. Die Schraube 430 ist auch hier wiederum nicht im ersten Abschnitt 300 angeordnet.

Im Unterschied zu der in den Fig. 6 und 7 gezeigten Situation wird anstelle der Abdeckkappe 180a aus Fig. 5a in diesem Fall die Abdeckkappe 180b aus Fig. 5b verwendet. Diese weist - wie zuvor erläutert wurde - einen dritten Seitenflächenbereich 370 mit einer gegenüber dem ersten Seitenflächenbereich 340 zurückversetzten Kontur auf. Hierdurch wird die Spanbildung bzw. Partikelbildung weiter in das Innere der Schiene 110 verlagert. Um dies näher zu illustrieren, zeigt Fig. 11 eine vergrößerte Darstellung des in Fig. 10 markierten Ausschnitts 440.

Fig. 11 zeigt so den vergrößerten Ausschnitt 440 aus Fig. 10. Die hier dargestellte Situation entspricht im Wesentlichen der in den Fig. 6 und 7 gezeigten Situation, bei der der Beginn des Einpressverfahrens der Abdeckkappe 180b gezeigt ist. Im Unterschied zu der Abdeckkappe 180a und der Situation, wie sie in den Fig. 6 und 7 gezeigt ist, sitzt hierbei jedoch aufgrund der zuvor beschriebenen Verjüngung des dritten Seitenflächenbereichs 370 gegenüber dem ersten Seitenflächenbereich 340 die Abdeckkappe 180b an einer Kante zwischen dem ersten Abschnitt 300 und dem zweiten Abschnitt 310 der Öffnung 170 auf. Daher wird an dieser Kante der Partikel 450, also der Span, bei der Verwendung dieser Abdeckkappe 180b erzeugt. Der Ort des Einpressens der Abdeckkappe 180b wird daher zusammen mit dem Ort der Erzeugung des Partikels 450 in die Schraubensenkung 230 verlagert.

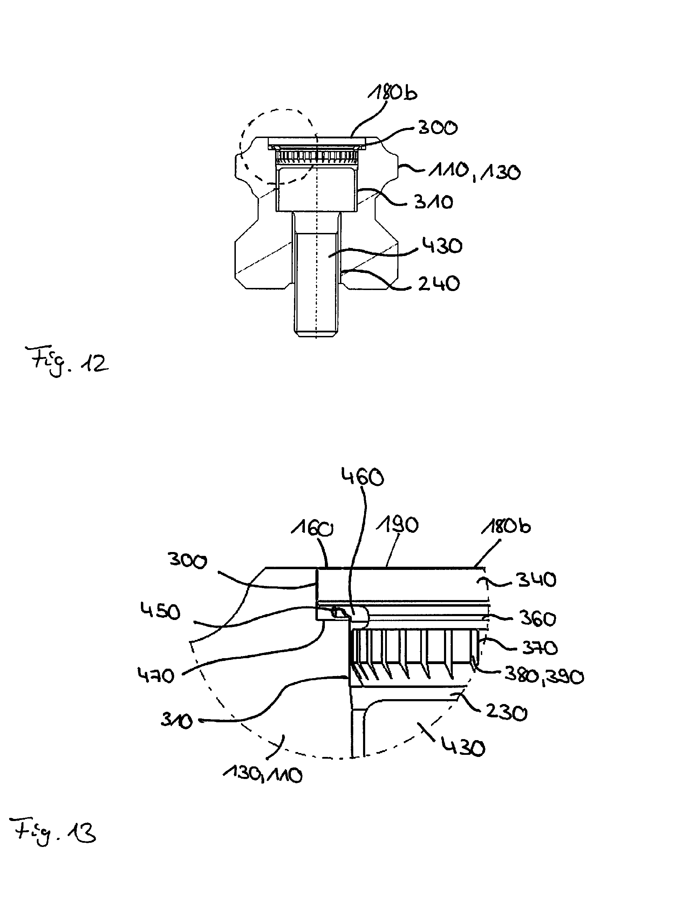

Fig. 12 zeigt eine Fig. 10 entsprechende Darstellung der Schiene 110, der Abdeckkappe 180b und der Schraube 430 in einem vollständig eingepressten Zustand. Die Öffnung 170 (nicht als solche in den Fig. 12 und Fig. 13 bezeichnet) wird hierbei von der Abdeckkappe 180b vollständig bündig verschlossen, sodass die Deckfläche 190 der Abdeckkappe 180 und die Oberfläche 160 der Schiene 110 miteinander fluchten. Fig. 13 zeigt hierbei wiederum eine vergrößerte Darstellung des Ausschnitts 440, wie er in Fig. 12 gezeigt ist.

Fig. 13 zeigt eine vergrößerte Darstellung des Ausschnitts 440 in dem verschlossenen Zustand. So zeigt Fig. 13 einerseits, dass die Oberfläche 160 der Schiene 110 und die Deckfläche 190 der Abdeckkappe 180 miteinander fluchten. Darüber hinaus zeigt Fig. 13 jedoch ebenso, dass der beim Einpressen gebildete Partikel 450 in dem Auffangraum 460 unterhalb der Oberfläche 160 der Schiene 110 gefangen ist. Der Auffangraum 460 wird hierbei im Bereich des Übergangs von dem ersten Abschnitt 300 und dem zweiten Abschnitt 310 der Öffnung 170 (nicht als solche bezeichnet in Fig. 13) und durch die zurückversetzte Kontur des zweiten Seitenflächenbereichs 360 gebildet.

Anders ausgedrückt werden Späne und andere Partikel 450, die bei dem Einpressen erzeugt werden, durch die Abdeckkappe 180b verdeckt. Dies zeigen auch Bilder nach der Demontage einer Abdeckkappe 180 im Rahmen von Versuchs- und Erprobungstests. So zeigen entsprechende Bilder Späne und andere Partikel 450 auf einem Vorsprung 470, der sich durch die unterschiedlichen Durchmesser des ersten Abschnitts 300 und des zweiten Abschnitts 310 der Öffnung 170 bildet. Es bleiben so Späne und andere Partikel, die beim Pressvorgang entstehen, an dem auch als Bohrungsstufe bezeichneten Vorsprung 470 liegen.

Die zuvor beschriebene Problematik einer im Bereich der Oberfläche 160 entstehenden Ausnehmung ist hier nicht gegeben. So können die Abdeckkappe 180b und die Schiene 110 im Bereich der Öffnung 170 beispielsweise entsprechend scharfe Kanten mit einer im Wesentlichen gleichen Kontur aufweisen, sodass ein im Wesentlichen vollständig bündiges Verschließen der Öffnung 170 möglich ist.

Durch ein Ausführungsbeispiel einer Abdeckkappe 180 kann es so gegebenenfalls möglich sein, eine einfach herzustellende, robuste, zuverlässige und möglichst einfach zu montierende Abdeckung für eine Öffnung 170 in einer Schiene 110 einer Linearführung 100 zu schaffen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

## Patentansprüche

1. Abdeckkappe (180) zum Verschließen einer Öffnung (170) in einer Schiene (110) einer Linearführung (100), mit folgenden Merkmalen:
einer Deckfläche (190), die derart ausgebildet und angeordnet ist, um die Öffnung (170) im Wesentlichen bündig mit einer Oberfläche (160) der Schiene (110) zu verschließen;
einem ersten Seitenflächenbereich (340), der sich in einem in die Öffnung (170) eingesetzten Zustand parallel zu einer vorbestimmten Richtung (350) erstreckt;
einem zweiten Seitenflächenbereich (360), der eine Kontur senkrecht zu der vorbestimmten Richtung (350) aufweist, die gegenüber einer Kontur des ersten Seitenflächenbereichs (340) zurückversetzt ist, um einen Auffangraum (460) zur Aufnahme eines sich bei einem Einsetzen der Abdeckkappe (180) lösenden Partikels (250) zu bilden; und
einem dritten Seitenflächenbereich (370), der sich wenigstens abschnittsweise parallel zu der vorbestimmten Richtung (350) erstreckt, der eine Kontur senkrecht zu der vorbestimmten Richtung (350) aufweist, die wenigstens teilweise über die Kontur des zweiten Seitenflächenbereichs (360) hinaus steht, und derart ausgebildet ist, um mit einer Seitenwand (290) der Öffnung (170) eine Presspassung zu bilden,
wobei der zweite Seitenflächenbereich (360) zwischen dem ersten (340) und dem dritten Seitenflächenbereich (370) angeordnet ist.

2. Abdeckkappe (180) nach Anspruch 1, bei der der erste Seitenflächenbereich (340) derart ausgebildet ist, um eine Übergangspassung oder eine Spielpassung mit der Seitenwand (290) der Öffnung (170) zu bilden.

3. Abdeckkappe (180) nach einem der vorhergehenden Ansprüche, bei der eine Kontur senkrecht zu der vorbestimmten Richtung (350) des dritten Seitenflächenbereichs (370) gegenüber einer Kontur des ersten Seitenflächenbereichs (340) zurückversetzt ist.

4. Abdeckkappe (180) nach einem der vorhergehenden Ansprüche, bei der der dritte Seitenflächenbereich (370) eine Verzahnungsstruktur (380) aufweist.

5. Abdeckkappe (180) nach Anspruch 4, bei der die Verzahnungsstruktur (380) eine Rändelung (390), beispielsweise eine axial ausgerichtete Rändelung (390), aufweist.

6. Abdeckkappe (180) nach einem der vorhergehenden Ansprüche, die eine Ausnehmung (400) aufweist, die sich von einer der Deckfläche (190) abgewandten Seite ausgehend in die Abdeckkappe (180) wenigstens teilweise in einen Bereich hineinerstreckt, der durch den dritten Seitenflächenbereich (370) seitlich begrenzt wird.

7. Abdeckkappe (180) nach einem der vorhergehenden Ansprüche, bei der der dritte Seitenflächenbereich (370) segmentiert ausgeführt ist.

8. Abdeckkappe (180) nach einem der vorhergehenden Ansprüche, wobei der dritte Seitenflächenbereich (370) eine Fase (420) aufweist.

9. Zusammenstellungsprodukt umfassend:
eine Schiene (110) einer Linearführung (110), wobei die Schiene (110) wenigstens eine von einer Oberfläche (160) der Schiene (110) ausgehende und sich entlang einer Erstreckungsrichtung (270) erstreckende Öffnung (170) umfasst; und
wenigstens eine Abdeckkappe (180) zum Verschließen der wenigstens einen Öffnung (170) gemäß einem der vorhergehenden Ansprüche, wobei die vorbestimmten Richtung (350) mit der Erstreckungsrichtung (270) im eingesetzten Zustand zusammenfällt.

10. Zusammenstellungsprodukt nach Anspruch 9, bei dem die Seitenwand (290) der Öffnung (170) an der Oberfläche (160) der Schiene (110) einen ersten Abschnitt (300) und einen sich an den ersten Abschnitt (300) entlang der Erstreckungsrichtung (270) anschließenden zweiten Abschnitt (310) aufweist, wobei der zweite Abschnitt (310) eine Kontur senkrecht zu der Erstreckungsrichtung (270) aufweist, die vollständig innerhalb einer Kontur des zweiten Abschnitts (310) senkrecht zu der Erstreckungsrichtung (270) liegt, und wobei der dritte Seitenflächenbereich (370) der Abdeckkappe (180) und der zweite Abschnitt (310) der Öffnung (170) gerade so ausgebildet und ausgestaltet sind, dass bei einem Einsetzen der Abdeckkappe (180) in die Öffnung (170) zwischen diesen eine Presspassung vorliegt.
